# EUROPEAN PATENT SPECIFICATION

(11) **EP 2 526 551 B1**
(45) Date of publication and mention of the grant of the patent: **02.08.2023**
(21) Application number: 11700675.9
(22) Date of filing: 21.01.2011
(51) Int. Cl.: G11B 27/031, G11B 27/30, G11B 27/34, G06F 3/048

(54) **IMPROVEMENT IN MEDIA EDITING**
VERBESSERTE MEDIENBEARBEITUNG
AMÉLIORATIONS EN MONTAGE DE MÉDIA

(30) Priority: 22.01.2010 GB 201001024
(43) Date of publication of application: 28.11.2012
(73) Proprietor: Le Gué Beheer BV, 2312KA Leiden (NL)
(72) Inventor: LE GUÉ, Raymond, 101 Reykjavik (IS)
(74) Representative: London IP Ltd
(86) International application number: PCT/EP2011/050843
(87) International publication number: WO 2011/089227

(56) References cited:
- EP-A1- 1 098 522
- EP-A1- 1 995 961
- WO-A1-2008/035022
- US-A- 5 307 456
- US-A- 5 963 203
- US-A1- 2001 015 729
- US-A1- 2004 263 529
- US-A1- 2008 109 751

## Description

The present invention relates to improved media presentation editing and assembly. It particularly relates to media item assembly where issues relating to media item inclusion acceptability, media item origin, and completed media presentation documentation and accessibility are addressed.

Even the earliest days of "moving pictures" required editing. Editing was achieved by a cut-and-join technique where lengths for film were selected from the film stock and glued together to make final presentation. This technique is still widely used in the cinematography industry. Addition of secondary elements was also required, in the form of titles, captions and explanatory sets of frames. Later sound and overlays were added often in an associated way, as in the use of hopefully synchronized gramophone recordings for the earliest "talking pictures". Latterly, with the use of computer graphics, where many different sub-scenes are compiled to make a single scene, together with real and constructed scenery and actors, the technology has become more complex. The present invention seeks to address the more complex issues presented by the modern visual presentation needs.

In radio, in the beginning all programmes were provided "live to air "where musicians, performers, actors and announcers all were present before one or more microphones in one or more studios to provide the entertainment for transmission in real time. When sound ecording became possible in the 1930's, in the shape of the "blattnerphone", the "live to air" aspect was no longer an issue but near impossibility of editing blattnerphone steel recording wire still necessitated a perfect or near perfect performance for the recording. It was not until the end of the second world war when German tape recorders became available that proper sound editing and recording became possible, with similar techniques used for film editing. Just as film editing has moved on in the computer age, so too has sound editing. The present invention also seeks to address the challenges posed by modern sound editing.

Television has largely taken over from film in presentation of audio visual media. Early television programmes were also "live to air" with possible inclusion of sound recordings and film clips. Any recording had to be made using cinematographic film. Video tape recording made possible storage and editing of television material. Latterly, digital recording has been introduced. The various pieces of recorded television material in various different forms exist in non-specified locations around the world. The present invention seeks to provide order and accessibility to what can be a chaos of stored television material.

Much information requires to be associated with media items. Such information as date of creation, duration, copyright owner, artists and so on is desirable and/or necessary. Unfortunately, the media item itself has been incapable of including the information. Often the extra information, essential for identification, surrounding circumstances etc. of the media item has been omitted, making even identification impossible. Often the extra information is affixed only to labels, or contained within possible disparate lists or ledgers, making any identification and information uncertain. Latterly, with the advent of digital recording, the extra information is provided in a separate file. The separate file can become lost, inaccessible or forgotten. The present invention seeks to provide a solution to the problem posed by information associate with a media item. Such information, associated with a media item, but invisible to a viewer of or listener to the media item, is called, in the disclosure of the invention given below, "metadata".

There are more complex issues with all audio and visual material. The exaggeratedly long period of copyright protection means that nearly all material enjoys some kind of copyright, even if it is only for an improved version of a media item. Copyright requires some form of real or implied license before a copyright item can be incorporated into a programme or visual presentation. Often it depends upon for whom the edited item is being prepared. An edited-in media item may be usable by one organization, but not by another. To assemble a media presentation with many concatenated or combined media items which is usable to all intended customers is difficult.

There are other restrictions. Different states have different standards. What is acceptable in one state is not acceptable in another. One has only to consider the many different religious statutes, age restrictions and censorship laws that exist in nearly all states to appreciate the problem. The present invention seeks automatically to overcome possible problems posed by copyright and other restrictions in the editing process.

WO2008035022A1 discloses a system where clips are represented in a three-dimensional array, one of the axes being time, the other axes being individuals or a group view, and locations. The clips may be represented by a thumbnail. However, the ability to edit the digital material in this system could still be beneficially improved.

The present invention is described with reference to editing television material. It is to be understood that this is not a limitation to the applicable fields of use for the invention. The invention is applicable to any editing process involving items of time-sequential material and includes, but is not limited to, audio, presentations of still photographs, computer generated images, television, cinematographic presentations, and computer games visual sequences.

According to an aspect of the present invention there is provided an apparatus according to claim 1. According to another aspect of the present invention there is provided a method according to claim 6. Further advantageous aspects are defined in the dependent claims.

The invention is further explained, by way of an example, by the following description, to be read in conjunction with the appended drawings, in which:
Figure 1 is a schematic drawing of an exemplary system wherein the in invention can be used.
Figure 2 is a schematic block diagram showing the elements of the editing and assembly station otherwise shown in Figure 1.
Figure 3, shows the display axes used in the display otherwise shown in Figure 2.
Figure 4 shows a first stage of arrangement of representations of display frames as shown on the poly-dimensional display.
Figure 5, showing how layers are displayed on the basic layout illustrated in Figure 4.
Figure 6 shows exemplary editing operations in the display of Figure 5.
Figure 7 shows the content of an exemplary frame layer.
Figure 8 is a flow chart showing the action of an automatic metadata warning system employable in the present invention as a frame is accessed for editing.
   and
Figure 9 shows preferred methods of storing metadata in the frame layer picture.

An editing and assembly station 10 is coupled by a local coupling bridge 12 to a local loop service 14. The local loop service 14 bi-directionally couples a number of locations 16 together for communication. Each location 16 can comprise its own editing and assembly station 10', accessible media storage 18 and other accessible storage 20. The editing and assembly station 10 is itself part of a location 16. The locations 16 can be different locations in the same building or complex, and can also be different geographical locations 16. In the case of a large broadcasting organization, the locations 16 are different regional stations. The different locations 16 are thus enabled to share and distribute media items and presentations with one another.

The local loop service 14 is coupled by an external service bridge 22 to one or more external resource gateways 24, such as the Internet, satellite services, LANs or WANs, to one or more external resource centres 26 each comprising accessible media storage 18' and coupled to its respective external resource gateway 24 by a respective external service bridge 22'. In this manner, each location 16 can acquire material from a large number of external resource centres 26 by various communication means for inclusion in a media presentation and, if storage is permitted, provide completed media presentations or parts of presented media presentations back to an external resource centre 26 for storage.

The locations 16 exchange media in the known MXF format, where single frames of television images are sent at a time. The MXF transmission format is a message which originates at a first location 16, is directed to a selectable other location 16, and comprises an audio portion conveying sound to be used with the video frame, a video portion carrying the image to be displayed, and a data portion. The data portion gives the number of the frame and enables locations 16 to exchange text, data and messages.

The present invention also seeks to allow the MXF or any other existing frame transfer formats to be retained in service, while permitting the advantages of the invention, as set out hereafter, to be used and exploited.

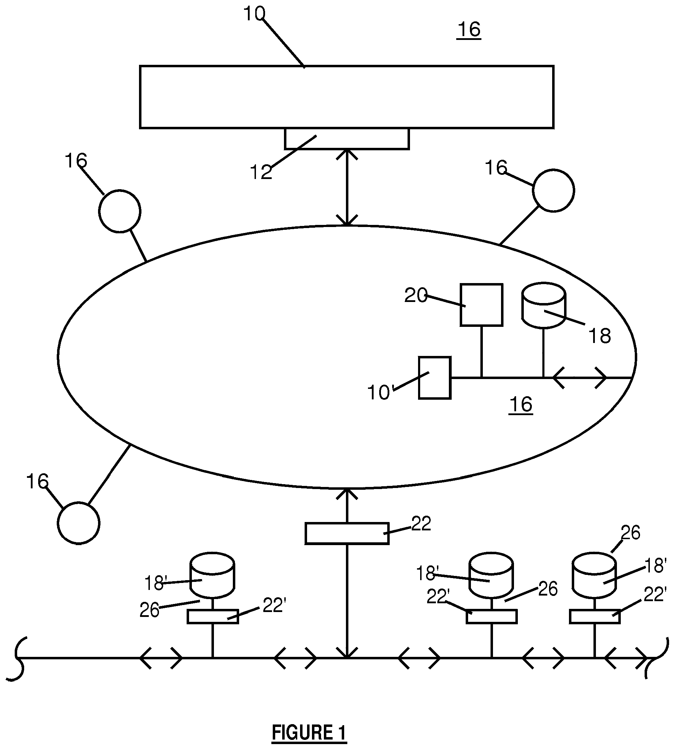

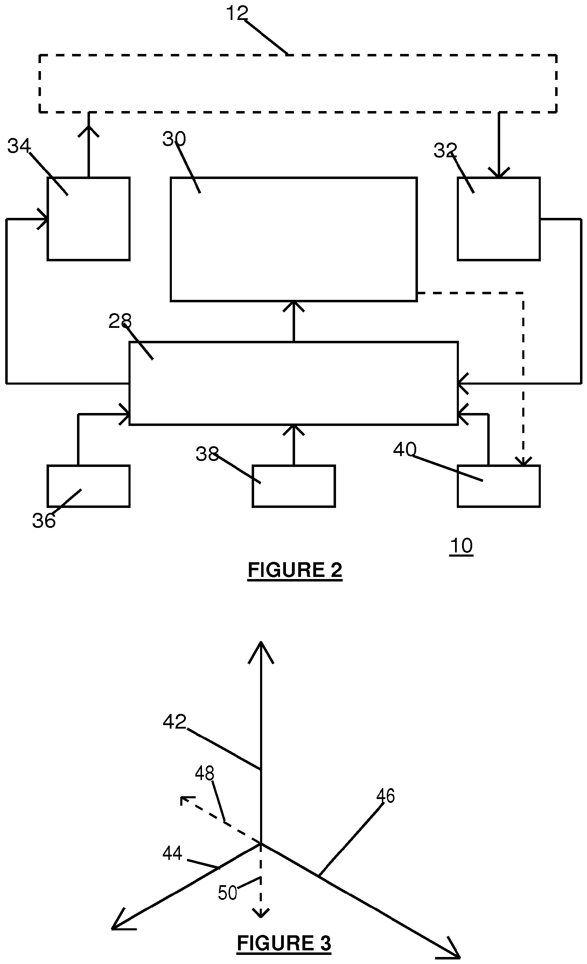

Attention is next drawn to Figure 2, a schematic block diagram showing the elements of the editing and assembly station 10 otherwise shown in Figure 1.

The editing and assembly station 10 comprises a controller 28 coupled to provide input to a display 30. The controller 28 received input frames and associated data from a received frame store 32 and provides input to an assembled frame store 34. The received frame store 32 and the assembled frame store are each coupled to the local coupling bridge 12. The received frame store is operable, when instructed by the controller 28, to receive and store requested media items from the locations 16 and/or the external resource centres 26. The assembled frame store 34 is operable, when instructed by the controller 28, to deliver completed material to the local coupling bridge 12 for transmission to be stored and/or received elsewhere 16 26.

The operator of the editing and assembly station 10 is provided with input devices such as a keyboard 36, a mouse device 38 and a touch screen 40. Operator input devices are not restricted by this listing, and any devices operable together to select, move, establish and delete items shown on the screen 30 and to select and instruct media item delivery in or out of the editing and assembly station 10 can be used.

The display 30 is, in this example, a flat screen display where multidimensional images are displayed in two dimensions in perspective and/or projected views. The display 30 can be of any other kind capable of providing a simulated or real 3 or more dimensional image. The display 30 can be a simulated 3 dimensional display where two differing colours are used to create simulated left and right eye depth of vision. The display 30 can also be a time division simulated 3 dimensional display where left and right eye images are displayed on a common screen in sympathy with alternating opacity of right and left eye lenses worn in controlled spectacles also to create separate right and left eye images leading to perceived left and right eye depth of vision. The display 30 can also be a virtual reality display where a virtual reality headset provides separate left and right eye images. In this instance virtual reality gloves can be used to access images or parts of the display to take the place of some or all the controller input devices 36 38 40. The display 30 can also be an actual three dimensional display, such as a holographic projection. As other two and three dimensional display technologies arise, they can also be used to provide a display according to the present invention.

Attention is next drawn to Figure 3, showing the display axes used in the display 30.

An axis 42 is used to display, in simulated vertical stacking, the version of the of image frames from which it is intended to assemble and edit an eventual media presentation. The version may relate to earlier attempts to create a presentation, or may relate to different versions retrieved from elsewhere. Equally, the versions may be stacked up, one above another, in the order they are created by editing and assembling.

A layer axis 44, extending in what is perceived as a projected general in and out of the screen direction, depicts the layer of a particular display frame image. In this age of computer graphics, many images are constructed from many layers. For example, one or more scenery image layers may be used, together with one or more live action image layers, text layers, computer generated image layers etc. to construct a single composite image.

A time axis 46, in a projected general let to right direction, displays the time sequence of each display frame image. The image sequence is provided as a series of display frames. Images of the display frames are provided, in sequential order, according to their sequence position along the time axis 46.

The position of a display frame on the time axis 46, on the version axis 42 and on the layer axis 44 determines and defines its position and allows it to be selected, for example, either by typing the co-ordinates or selection by pointing or touching. Other methods are also possible.

The display 30 can be used to provide poly-dimensional display images in effectively more than three dimensions. A first additional axis 48 can be used to display, for example, audio files and/or text which can be added to the display frames. This can be of immense value when different language versions of a media presentation are being provided. A second additional axis 50 can be used to display, for example, metadata, or parts of metadata, relating to the display frames. Another method, also available to the present invention, is to hide one axis and display another in its place providing different information. Another poly-dimensional aspect of the display is the "out of hyperspace" option where messages or images can materialize or pop up, for example, warning of some problem such as time overrun or cultural or copyright, or other incompatibility.

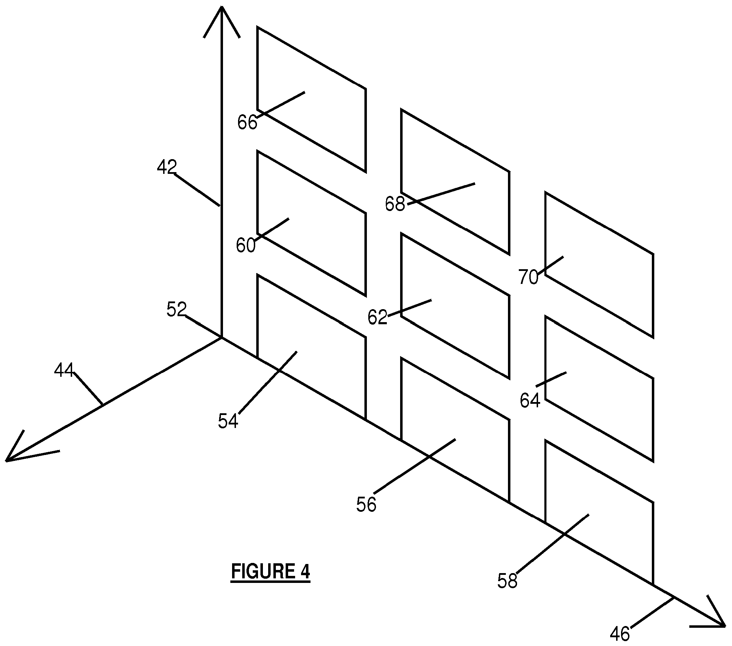

Attention is next drawn to Figure 4, showing a first stage of arrangement of representations of display frames as shown on the poly-dimensional display 30.

Display frames are arranged for the display 30 according to their distance from the origin 52 of the three axes 42 44 46. The nearer the origin, the lower the number. A first display frame of a first version 54 sits next too the origin along the time axis 46. A second display frame of the first version 56 sits next to the first display frame of the first version 54 along the time axis 46. A third display frame of the first version 58 sits next to the second display frame of the first version 56 along the time axis 46. Later display frames are arranged further along the time axis 46.

Displayed above the display frames of the first version 54 56 58 are the display frames 60 62 64 of a second version. The display frames of the second version 60 62 66 are similarly arranged along the time axis 46 as the display frames of the first version 54 56 58, and further along the version axis 42 away from the origin 52. The second version display frames are arranges as a first display frame of the second version 60, a second display frame of the second version 62, and a third display frame of the second version 64. Later display frames of the second version are arranged on the same level on the version axis and along the time axis 46.

Displayed above the display frames of the second version 60 62 64 are the display frames 66 68 70 of a third version. The display frames of the second version 66 68 70 are similarly arranged along the time axis 46 as the display frames of the first and second versions 54-64, and further along the version axis 42 away from the origin 52. The third version display frames are arranged as a first display frame of the third version 66, a second display frame of the third version 68, and a third display frame of the third version 70. Later display frames of the third version are arranged on the same level on the version axis and along the time axis 46.

While only three display frames of each version are shown in Figure 4, it is to be understood that more or fewer display frames can be shown, and more that three versions provided, higher numbered versions being spaced proportionally away from the origin 52 up the version axis and also spaced along the time axis 46.

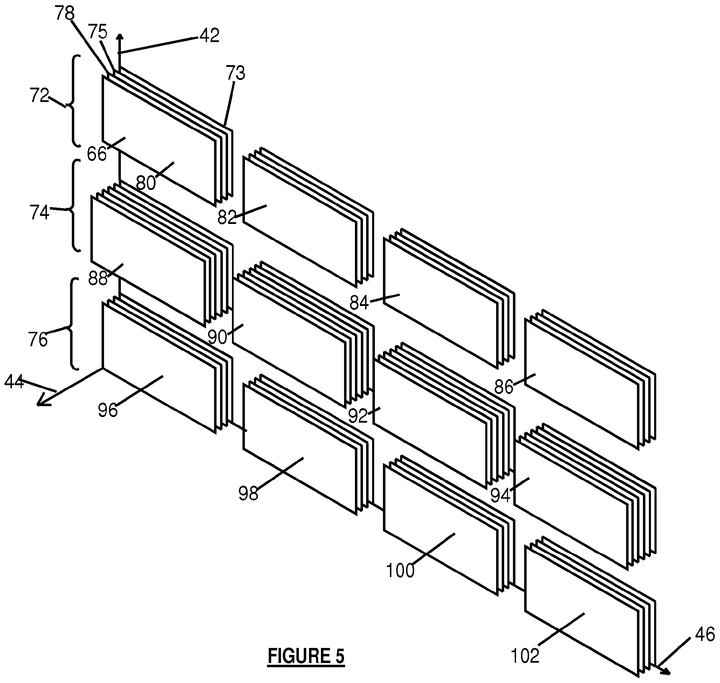

Attention is next drawn to Figure 5, showing how layers are displayed on the basic layout illustrated in Figure 4.

The layers represent different components such as backgrounds, overlays, etc. which go to make up a final composite picture suitable for acceptance as a final display frame to be incorporated into a final media presentation.

The display frames are displayed as versions, in Figure 5, there being shown a third version 72, a second version 74 and a first version 76, arrayed along the version axis 42 and spread along the time axis 46.

Different layers are shown. Turning to the first display frame 66 of the third version 72, as previously show in Figure 3, it is has, in this instance, a total of four layers. A first layer of the first display frame of the third version 73 is shown at the origin position of the layer axis 44. A second layer of the first display frame of the third version 75 is shown one position further along the layer axis 44. A third layer of the first display frame of the third version 78 is shown one position further along the layer axis from the second layer of the first display frame of the third version 76. Finally, a fourth layer of the first display frame of the third version 80 is shown on top of the first display frame 66 display frame of the third display version, since there are only four layers, being one position further along the layer axis from the third layer of the first display frame of the third version 78.

Shown along the time axis 46 of the third version 72, on top of each display frame display, are a fourth layer of the second display frame of the third version 82, a fourth layer of the third display frame of the third version 84, and a fourth layer of the fourth display frame of the third version 86.

Turning to the second version 74, it is noted that there are six layers. Visible on the top of each display frame are to be found the sixth layer of the first display frame of the second version 88, the sixth layer of the second display frame of the second version 90, the sixth layer of the third display frame of the second version 92, and the sixth layer of the fourth display frame of the second version 94.

Turning finally to the first version 76, there are for layers. Arranged at the top of each frame display are shown a fourth layer of the first display frame of the first version 96, a fourth layer of the second display frame of the first version 98, a fourth layer of the third display frame of the first version 100, and a fourth layer of the fourth display frame of the first version 102.

It is to be understood that the number of display frames, layers and versions has been chosen merely for convenience of explanation, and that the invention permits much larger or smaller numbers to be shown. It is also to be understood that the frame number given in figure 5 only relates to the displayed "display frames", and not to the "frame number" of the uploaded material as earlier described or indeed, to the overall production frame number used to number the frames in the completed production, as will be described later.

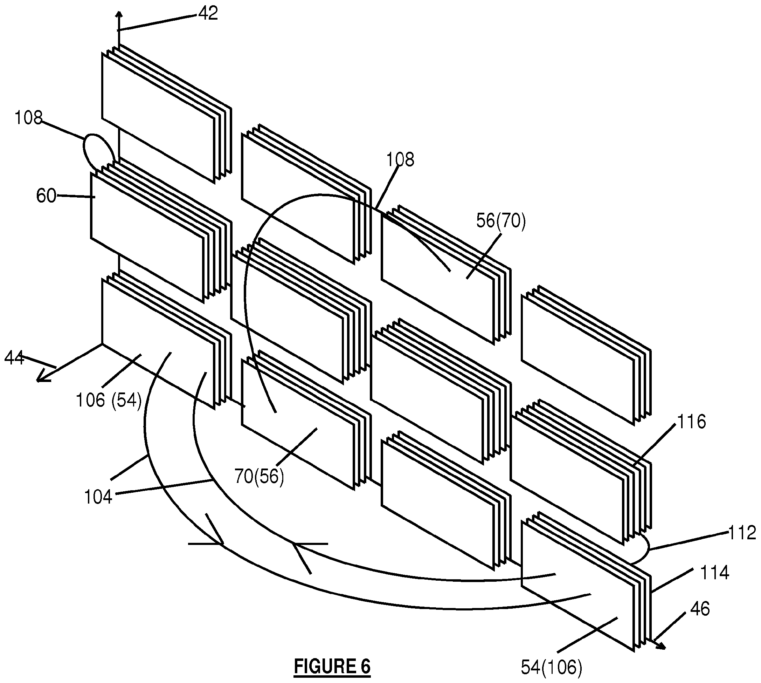

In editing, any operation between frames and layers is permissible. Attention is next drawn to figure 6, showing exemplary editing operations.

A first exemplary editing operation 104 shows an exchange operation, where, in this instance, the first frame of the first version 54 and the fourth frame of the first version 106 are exchanged, illustrating frame exchange within the same version.

A second exemplary operation 108 shows, in this instance, another exchange operation where the second frame of the first version 56 is exchanged with the third frame of the third version 70, illustrating how frames can be exchanged between versions and time slots.

A third exemplary operation 110 shows, in this instance, exchange of the second and fifth layers in the first frame of the second version 60, illustrating the possibility of exchanging layers in a frame.

A fourth exemplary editing operation 112 shows exchange of the first layer of the fourth frame of the first version 114 with the third layer of the fourth frame of the second version 116, illustrating how layers can be exchanged between versions.

The term "frame element" as used hereafter means any single or collective layer or group of layers in any frame, or selected group of frames, in any selected version, or selected part of a version,

Figure 6 illustrates only a part of the editing operations possible within the invention. The following list is more complete, but is not exhaustive:
1) Copy and paste to insert a selected frame element in a selected another location. The selected frame element can be used either to replace a selected existing frame element or simply to be added as an additional element.
2) Delete a selected frame or frame element.
3) Insert a selected frame or frames, or frame elements, as a new frame in a selected location, locations or contiguous group of locations.
4) Undo the last action(s).
5) Redo the last action(s).
6) View a frame
7) Run a selected version between selected frames.
8) Select/delete/add a sound track version or optional sound track version. This can be from an outside source not immediately associate with an embedded sound track.
9) Select/delete/add a subtitle or subtitle option. This can be from an outside source not immediately associate with an embedded subtitle or subtitle option.
10) Add/delete metadata (this is explained later).

The editing operations of the invention are limited only by what is feasible and possible within the frame structure as shown on the display 30.

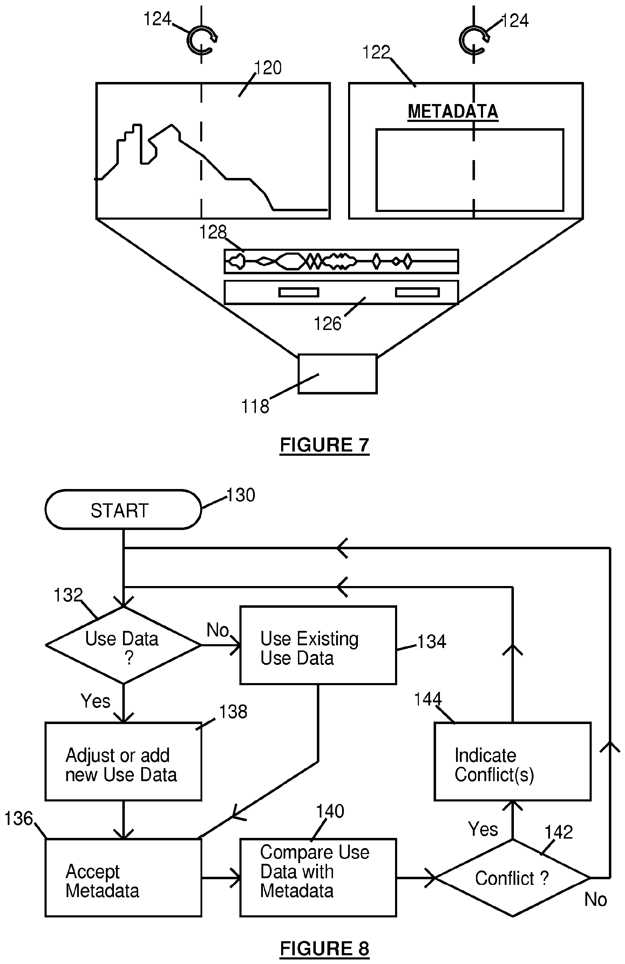

Attention is next drawn to Figure 7, showing the content of an exemplary frame layer.

The person editing can select any layer, or group of layers, to display. This can be achieved simply by clicking on the items concerned and indicating that display is desired. In Figure 7, a single layer 118 in a single frame has been selected.

It is to be understood that a test frame can also be provided, where plural elements can selected for display together from different layers, versions and frames, but not actually part of any complete version. Such a test frame is suitable for testing or improving fit or efficacy. Having selected to use a test frame and the elements therein, the editor views the end display result and decides if it is acceptable. This can be effective in deciding which editing options to select.

The selected fame 118 provides two or more possible images. A first image 120 is a still picture of the content of the video fame. A second image 122 is a display of metadata. The editor can elect to swap the first and second images on the display 30, as indicated by the alternate symbol 124.

The selected frame can also be provided with different subtitles 126 and calibrated signal traces 128. These elements 120 122 126 128 can also be displayed together, as well as separately or in groups.

The metadata consists in any data relevant to the frame layer or group of frame layers 118 selected for display. The metadata is stored with the elements in the loop 14 locations 16, the external resource centres from whence it is uploaded to the received frame store 32 in the editing and assembly station 10. The metadata is also stored in the assembled frame store 34 prior to uploading to other destinations 16 26. It is to be appreciated that the contents of the assembled frame store 34, if they have not been uploaded, can be recalled back to the editing facility in the editing and assembly station for further scrutiny and possible further editing.

Metadata can include: date of creation; aspect ratio of picture; size of picture; definition of picture; frequency; person, team or organization creating; programme in which used; where shot; earlier versions; storage location of current version; storage locations of earlier versions; camera type; camera position; camera lens; exposure; operation type such as green screen dropout; copyright holder in each element; organizations to whom competed programme can be supplied: organizations to whom completed program cannot be supplied; who has a copyright license; countries or states to which completed program can be supplied; countries or states to which completed program cannot be supplied; times of day when the completed programme can be broadcast; times of day when the completed programme cannot be broadcast; cultural restrictions which may be violated by the element; religious restrictions which may be violated by the element; other IP (patents) relating to the element; and who owns a license for the other IP.

This is not an exclusive or exhaustive list. Metadata can be any item of information relevant to or related to the media content. Other items and types of metadata are included within the scope of the present invention.

The person editing can view the metadata and take his own actions depending upon his instructions. An alternative is to use an automatic or semi-automatic system whereby uninstructed or unaware individuals can perform safe editing and assembly. Such an automatic or semi-automatic system also prevents inadvertent mistakes by otherwise correctly aware and instructed editors and assemblers.

Attention is next drawn to Figure 8, a flow chart showing the action of an automatic metadata warning system employable in the present invention as a frame is accessed for editing.

From a start operation 130, control is passed to a first test 132 which looks to see if any new use data, being an indication to what use the edited material is to be put, is available. This use data may be manually provided by the user of the editing facility, be downloaded from another source, or may not be available at all.

If no use data is provided, a first operation 134 substitutes a standard set of use data (if any) and passes control to a second operation 136 which accepts the metadata that comes with the frame layer or selected layers.

If there is new use data, a third operation 138 adjusts and/or adds the use data and passes control to the second operation 136.

The second operation passes control to a fourth operation 140 where the metadata and the use data are compared. A second test 142 looks to see if there are any conflicts between the use data and the metadata. If there are none, control is passed back to the first test 132. If there is a conflict, a fifth operation 144 causes the display 30 to provide indication of a conflict and the nature of the conflict. Control is passed back to the first test 132, optionally upon indication of recognition of the conflict from the operator of the editing facility.

In this manner, as the content of groups of frame components is changed, a continuous metadata update and warning facility is provided.

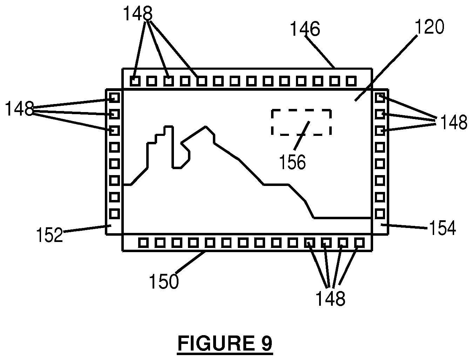

Attention is next drawn to Figure 9, showing preferred methods of storing frame/layer metadata.

One way to accommodate metadata is to adapt the frame and text/message transfer format, such as the MXF format described above, to carry metadata, perhaps instead of carrying messages or data. While this is acceptable within the present invention, the problem exists that not all forms of media storage are adapted to store metadata. It is much preferred that, for the present invention, the metadata be stored as part of the layer/frame image 120. This provides the considerable technical advantage that metadata, included in the image 120, is automatically stored with the image in any storage apparatus capable of storing thee image 120, and can never become dissociated (lost) from the image 120 as it is now part of the image.

One method of storing metadata is to employ non-visible portions of the frame 120 as a store. For example, the top portion of the frame 146 can be used to accommodate metadata blocks 148 in one or more scan lines, rather in the manner of "Teletext" information.

The lower portion 150 of the frame 120 can similarly be used, as can the leading portion 152 and a trailing portion 154. It is to be noted that the portions of the frame 146 150 152 154 are shown in Figure 9 in exaggerated size. The actual proportion if the image size which is occupied by metadata is, in fact, very small.

The metadata can be stored blended with the image, as indicated by dashed outline 156, over part or all of the image, according to any of many well-known methods used, until now, for example, to embed hidden messages, programs and viruses into an image.

The individual measures for storing metadata, described above, can be used individually or collectively in any combination.

When editing and assembly is finished, the metadata is added to already existing metadata for the particular frame/layer and the frame/layer passed to the assembled frame store 34 to be sent via the local loop service 14 to be stored in one or more locations 16 or external resource centre 26 integral with its metadata.

## Claims

1. An apparatus for assembling and editing image frames; said apparatus comprising:
means to receive and store a plurality of sequential image frames;
a means to provide a sequentially ordered poly-dimensional display of the sequential image frames;
means to edit image frames within the display; and
means to store and send the edited image frames. the ordered poly-dimensional display is operable to display the sequential image frames on at least a time axis, and a version axis, ***characterized in that***
the image frames are also displayed on a layer axis,
the layers displayed along the layer axis at a given time and version representing the components which go to make up a final composite picture of an image frame.
the time axis, version axis, and layer axis are displayed in a simulated or real display showing 3 dimensions, said means to edit image frames includes means to select and swap any displayed layer in any displayed frame at any given time and version with any displayed layer in any displayed frame at any given time and version; means to copy any displayed layer in any displayed frame at any given time and version to replace any displayed layer in any displayed frame 2. at any given time and version; means to delete any displayed layer in any displayed frame for any given time and version.

2. An apparatus, according to claim 1, wherein said means to edit image frames includes means to insert any selectable frame in any selectable version and time slot as a new frame.

3. An apparatus, according to claim 1, wherein said means to edit image frames includes means to swap layers within the same frame.

4. An apparatus, according to claim 1, wherein said means to edit image frames includes means to undo previous editing action; and means to redo a previous editing action.

5. An apparatus, according to any previous claim, wherein there is included the means to recover and to store metadata relating to each particular layer of a frame,
and where the metadata is stored within the image of the frame, the apparatus further comprising means to provide an alert, comprising;
means to receive and store conditions of use data;
means to receive and store metadata;
means to compare the conditions of use data with the metadata; and
the means to provide an alert being configured to provide an alert if a conflict between the conditions of use data and the metadata is detected.

6. A method for assembling and editing image frames; said method comprising the steps of:
receiving and storing a plurality of sequential image frames;
providing a sequentially ordered poly-dimensional display of the sequential image frames; editing image frames within the display; and
storing and send the edited image frames.
the ordered poly-dimensional display being operable to display the sequential image frames on at least a time axis, and a version axis, ***characterized in that*** there is provided the further steps of
displaying image frames on a layer axis,
displaying the layers along the layer axis at a given time and version representing the components which go to make up a final composite picture of an image frame,
displaying the time axis, version axis, and layer axis in a simulated or real display showing 3 dimensions.
the step of editing image frames includes: selecting and swapping any displayed layer in any displayed frame at any given time and version with any displayed layer in any displayed frame at any given time and version;
copying any displayed layer in any displayed frame at any given time and version to replace any displayed layer in any displayed frame at any given time and version; deleting any displayed layer in any displayed frame for any given time and version.

7. A method according to claim 6, wherein the step of editing image frames includes : inserting any selectable frame in any selectable version and time slot as a new frame;

8. A method according to claim 6, wherein the step of editing image frames includes : swapping layers within the same frame;

9. A method according to claim 6, wherein the step of editing image frames includes undoing previous editing action; and redoing a previous editing action.

10. A method, according to any of claims 6 to 9, including a step of providing an alert, the step of providing an alert comprising the steps of;
receiving and storing conditions of use data;
receiving and storing metadata;
comparing the conditions of use data with the metadata;
and
providing an alert if a conflict between the conditions of use data and the metadata is detected.

## Patentansprüche

1. Apparat für die Montage und Bearbeitung von Bildrahmen; der Apparat umfassend:
Mittel für das Empfangen und Speichern einer Vielzahl von sequentiellen Bildrahmen;
Mittel, um eine sequentiell geordnete mehrdimensionale Anzeige der sequentiellen Bildrahmen bereitzustellen;
Mittel für die Bearbeitung von Bildrahmen innerhalb der Anzeige; und
Mittel, um die bearbeiteten Bildrahmen zu speichern und zu versenden.
Die geordnete mehrdimensionale Anzeige ist funktionsbereit, um die sequentiellen Bildrahmen auf mindestens einer Zeitachse anzuzeigen, und
eine Versionsachse, **dadurch gekennzeichnet, dass**
die Bildrahmen auch auf einer Schichtachse angezeigt werden,
die Schichten werden entlang der Schichtachse zu einer gegebenen Zeit in einer gegebenen Version angezeigt, die die Komponenten repräsentieren, aus denen ein abschließendes zusammengesetztes Bild besteht.
Die Zeitachse, Versionsachse und Schichtachse werden auf einem simulierten oder realen Display in 3 Dimensionen angezeigt,
dieses Mittel zum Bearbeiten von Bildrahmen beinhaltet Mittel, um jede angezeigte Schicht in einem angezeigten Rahmen zu jeder gegebenen Zeit und in jeder gegebenen Version auszuwählen und mit jeder angezeigten Schicht zu jeder beliebigen Zeit und in jeder Version zu tauschen;
Mittel zum Kopieren jeder angezeigten Schicht in jedem angezeigten Rahmen zu jeder gegebenen Zeit und in jeder gegebenen Version, um jede angezeigte Schicht in jedem angezeigten Rahmen zu jeder beliebigen Zeit und in jeder Version zu ersetzen;
Mittel zum Löschen jeder angezeigten Schicht in jedem angezeigten Rahmen für jede gegebene Zeit und Version.

2. Apparat nach Anspruch 1, wobei diese Mittel zum Bearbeiten von Bildrahmen Mittel einschließen, um jeden ausgewählten Rahmen in jede ausgewählte Version und jedes Zeitfenster als neuen Rahmen einzufügen.

3. Apparat nach Anspruch 1, wobei dieses Mittel zum Bearbeiten von Bildrahmen Mittel zum Tauschen von Schichten innerhalb desselben Rahmens beinhaltet.

4. Apparat nach Anspruch 1, wobei dieses Mittel zum Bearbeiten von Bildrahmen Mittel zum Rückgängigmachen einer vorherigen Verarbeitungsaktion beinhaltet; und Mittel zum Wiederherstellen einer vorherigen Bearbeitungsaktion.

5. Apparat nach einem der vorhergehenden Ansprüche, wobei das Mittel zum Wiederherstellen und Speichern von Metadaten bezogen auf jede einzelne Schicht eines Rahmens eingeschlossen ist,
und wobei die Metadaten im Bild des Rahmens gespeichert werden,
der Apparat umfasst ferner Mittel zum Bereitstellen eines Alarms, der Folgendes umfasst;
Mittel zum Empfangen und Speichern von Bedingungen für Nutzungsdaten;
Mittel zum Empfangen und Speichern von Metadaten;
Mittel zum Vergleichen der Bedingungen der Nutzungsdaten mit den Metadaten; und
die Mittel zum Bereitstellen eines Alarms, der konfiguriert ist, einen Alarm auszulösen, wenn ein Konflikt zwischen den Bedingungen der Nutzungsdaten und den Metadaten erkannt wird.

6. Verfahren zum Zusammensetzen und Bearbeiten von Bildrahmen, wobei besagtes Verfahren die folgenden Schritte umfasst:
Empfangen und Speichern einer Vielzahl von sequentiellen Bildrahmen;
Bereitstellen einer sequentiell geordneten mehrdimensionalen Anzeige der sequentiellen Bildrahmen;
Bearbeiten von Bildrahmen innerhalb der Anzeige; und
Speichern und Senden von bearbeiteten Bildrahmen.
Die geordnete mehrdimensionale Anzeige ist funktionsbereit, um die sequentiellen Bildrahmen auf mindestens einer Zeitachse anzuzeigen, und
eine Versionsachse **dadurch gekennzeichnet, dass** die folgenden weiteren Schritte bereitgestellt werden
Anzeigen von Bildrahmen auf einer Schichtachse,
Anzeigen der Schichten entlang der Schichtachse zu einer gegebenen Zeit in einer gegebenen Version, die die Komponenten repräsentieren, aus denen ein endgültiges zusammengesetztes Bild eines Bildrahmens besteht,
Anzeigen der Zeitachse, Versionsachse und Schichtachse auf einem simulierten oder realen Display in 3 Dimensionen;
der Schritt des Bearbeitens der Bildrahmen beinhaltet: Auswählen und Tauschen von angezeigten Schichten in jedem angezeigten Rahmen zu jeder gegebenen Zeit und in jeder gegebenen Version mit jeder angezeigten Schicht in jedem angezeigten Rahmen zu jeder beliebigen Zeit und in jeder Version;
Kopieren jeder angezeigten Schicht in jedem angezeigten Rahmen zu jeder gegebenen Zeit und in jeder gegebenen Version, um jede angezeigte Schicht in jedem angezeigten Rahmen zu jeder beliebigen Zeit und in jeder Version zu ersetzen;
Löschen jeder angezeigten Schicht in jedem angezeigten Rahmen für jede gegebene Zeit und Version.

7. Verfahren nach Anspruch 6, wobei der Schritt des Bearbeitens der Bildrahmen Folgendes beinhaltet: Einfügen jedes auswählbaren Rahmens in jede auswählbare Version und jedes Zeitfenster als neuen Rahmen;

8. Verfahren nach Anspruch 6, wobei der Schritt des Bearbeitens der Bildrahmen Folgendes beinhaltet: Tauschen der Schichten innerhalb desselben Rahmens;

9. Verfahren nach Anspruch 6, wobei der Schritt des Bearbeitens der Bildrahmen das Rückgängigmachen einer Bearbeitungsaktion beinhaltet; und das Wiederherstellen einer vorherigen Bearbeitungsaktion.

10. Verfahren nach Anspruch 6, das einen Schritt des Bereitstellens eines Alarms beinhaltet, der Schritt des Bereitstellens eines Alarms umfasst dabei die folgenden Schritte;
Empfangen und Speichern von Bedingungen für Nutzungsdaten;
Empfangen und Speichern von Metadaten;
Vergleichen der Bedingungen der Nutzungsdaten mit den Metadaten; und
Bereitstellen eines Alarms, wenn ein Konflikt zwischen den Bedingungen der Nutzungsdaten und den Metadaten erkannt wird.

## Revendications

1. Appareil destiné à assembler et à modifier des trames d'images ; ledit appareil comprenant :
un moyen de recevoir et de mémoriser une pluralité de trames d'images séquentielles ;
un moyen de fournir une unité d'affichage polydimensionnel ordonné séquentiellement des trames d'images séquentielles ;
un moyen de modifier des trames d'images dans l'affichage ; et
un moyen de mémoriser et d'envoyer les trames d'images modifiées.
l'unité d'affichage polydimensionnel ordonné est utilisable pour afficher les trames d'images séquentielles sur au moins un axe temporel, et
un axe de version, **caractérisé en ce que**
les trames d'images sont également affichées sur l'axe de la couche,
les couches affichées le long de l'axe de la couche à un instant donné et une version représentant les éléments qui composent une image composite finale d'une trame d'image.
l'axe du temps, l'axe de la version et l'axe de la couche sont affichés dans un affichage simulé ou réel en 3 dimensions,
ledit moyen de modifier les trames d'images comporte un moyen de sélectionner et de permuter n'importe quelle couche affichée dans n'importe quelle trame affichée, à un instant donné et dans une version donnée, avec n'importe quelle couche affichée dans n'importe quelle trame affichée, à un instant donné et dans une version donnée ;
le moyen de copier n'importe quelle couche affichée dans n'importe quelle trame affichée à un instant donné et dans une version donnée pour remplacer n'importe quelle couche affichée dans n'importe quelle trame affichée à un instant donné et dans une version donnée ;
le moyen de supprimer n'importe quelle couche affichée dans n'importe quelle trame affichée pour un instant donné et une version donnée.

2. Appareil, selon la revendication 1, dans lequel ledit moyen de modifier des trames d'images comporte le moyen d'insérer n'importe quelle trame sélectionnable dans n'importe quelle version sélectionnable et dans n'importe quel intervalle de temps en tant que nouvelle trame.

3. Appareil selon la revendication 1, dans lequel ledit moyen de modifier des trames d'images comporte le moyen de permuter des couches dans une même trame.

4. Appareil, selon la revendication 1, dans lequel ledit moyen de modifier des trames d'images comporte le moyen d'annuler l'action de modification précédente et le moyen de répéter une action de modification précédente.

5. Appareil selon l'une des revendications précédentes, dans lequel sont inclus le moyen de récupérer et de mémoriser les métadonnées relatives à chaque couche particulière d'une trame,
et où les métadonnées sont mémorisées dans l'image de la trame,
l'appareil comprenant en outre un moyen de fournir une alerte, comprenant ;
un moyen de recevoir et de mémoriser les données relatives aux conditions d'utilisation ;
un moyen de recevoir et de mémoriser des métadonnées ;
un moyen de comparer les données relatives aux conditions d'utilisation avec les métadonnées ; et
le moyen de fournir une alerte étant conçu pour fournir une alerte en cas de détection d'un conflit entre les données relatives aux conditions d'utilisation et les métadonnées.

6. Procédé destiné à assembler et à modifier des trames d'images ; ledit procédé comprenant les étapes suivantes :
la réception et la mémorisation d'une pluralité de trames d'images séquentielles ;
la fourniture d'un affichage polydimensionnel ordonné séquentiellement des trames d'images séquentielles ;
la modification des trames d'images dans l'affichage ; et
la mémorisation et l'envoi des trames d'images modifiées.
l'unité d'affichage polydimensionnel ordonné étant utilisable pour afficher les trames d'images séquentielles sur au moins un axe temporel, et
un axe de version, **caractérisé en ce qu'**il est prévu les étapes supplémentaires suivantes :
l'affichage de trames d'images sur l'axe de la couche,
l'affichage des couches le long de l'axe de la couche à un instant donné et une version représentant les éléments qui composent une image composite finale d'une trame d'image,
l'affichage de l'axe du temps, de l'axe de la version et de l'axe de la couche dans une unité d'affichage simulé ou réel en 3 dimensions _{;}
l'étape de modification des trames d'images comporte : la sélection et la permutation de n'importe quelle couche affichée dans n'importe quelle image affichée, à un instant donné et dans une version donnée, avec n'importe quelle couche affichée dans n'importe quelle image affichée, à un instant donné et dans une version donnée ;
la copie de n'importe quelle couche affichée dans n'importe quelle trame affichée à un instant donné et dans une version donnée pour remplacer n'importe quelle couche affichée dans n'importe quelle trame affichée à un instant donné et dans une version donnée ;
la suppression de n'importe quelle couche affichée dans n'importe quelle trame affichée pour un instant donné et une version donnée.

7. Procédé selon la revendication 6, dans lequel l'étape de modification des trames d'images comporte : l'insertion de n'importe quelle trame sélectionnable dans n'importe quelle version sélectionnable et dans n'importe quel intervalle de temps en tant que nouvelle trame.

8. Procédé selon la revendication 6, dans lequel l'étape de modification des trames d'images comporte : la permutation des couches dans une même trame ;

9. Procédé selon la revendication 6, dans lequel l'étape de modification des trames d'images comporte l'annulation de l'action de modification précédente et la répétition d'une action de modification précédente.

10. Procédé, selon l'une quelconque des revendications 6, comportant une étape de fourniture d'une alerte, l'étape de fourniture d'une alerte comprenant les étapes suivantes ;
la réception et la mémorisation des données relatives aux conditions d'utilisation ;
la réception et la mémorisation des métadonnées ;
la comparaison des données relatives aux conditions d'utilisation avec les métadonnées ; et
la fourniture d'une alerte en cas de détection d'un conflit entre les données relatives aux conditions d'utilisation et les métadonnées.
